# EUROPÄISCHE PATENTANMELDUNG

(11) **EP 0 857 955 A1**
(43) Veröffentlichungstag der Anmeldung: **12.08.1998**
(21) Anmeldenummer: 98102139.7
(22) Anmeldetag: 07.02.1998
(51) Int. Cl.: G01K 1/14

(54) **Abwurfvorrichtung für Messbomben**

(30) Priorität: 10.02.1997 DE 19704876
(71) Anmelder: STEINFURTER EISENWERK GmbH, Maschinen- und Anlagenbau, D-48565 Steinfurt (DE); MINKON SAMPLER-TECHNIK GmbH, 40699 Erkrath (DE)
(72) Erfinder: Wünsch, Hartmut, 40822 Mettmann (DE); Tuschwitz, Peter Michael, 48565 Steinfurt (DE)
(74) Vertreter: König, Reimar, Dr.-Ing.

(57) **Zusammenfassung**

Die Erfindung betrifft eine Meßbombenabwurfvorrichtung zur Durchführung von Messungen in metallurgischen Gefäßen, die dadurch, daß die Meßbomben (5) in Reihen angeordnet sind eine einfache Durchführung des Meßvorgangs erlaubt.

## Beschreibung

Die Erfindung betrifft eine Meßbombenabwurfvorrichtung zur Durchführung von Messungen in metallurgischen Gefäßen.

Bei Messungen, beispielsweise Temperaturmessungen in metallurgischen Gefäßen, insbesondere Messungen in der Flüssigphase ist es bekannt, Meßlanzen, die mit einer Meßanzeige verbundenen sind, in die flüssige Phase einzutauchen und die Messung unter Abbrennen einer den Lanzenkern umgebenden Hülse, durchzuführen.

Diese Vorgehensweise besitzt den Nachteil eines hohen Zeit- und Kostenaufwandes für den einzelnen Meßvorgang. Die Meßlanze muß mit Hilfe eines Antriebs in die Schmelze eingefahren werden. Hierbei ist zum Erzielen brauchbarer Meßergebnisse ein tiefes Einfahren in das Gefäß erforderlich, was eine entsprechend lange Meßlanze erfordert. Die Meßlanze wird dann, nach der Messung, mit einer erheblichen Ausfahrhöhe, die oberhalb der metallurgischen Gefäße zur Verfügung stehen muß, ausgefahren. Die Meßlanze muß ferner eine Wasserkühlung besitzen, die ständig beschädigungsgefährdet ist.

Beispielsweise aus der US-PS 3497398 ist es bekannt, sogenannte Meßbomben für die Messung in der Metallschmelze zu verwenden. Meßbomben können nach einem bekannten Verfahren aus einem Karussell über einen Abwurfschacht in das metallurgische Gefäß abgeworfen werden, wobei zunächst eine Verbindung zwischen der Meßbombe und einer Meßanlage über Meßkabel bestehen bleibt. Nach Beendigung der Messung wird das Kabel durch Schließen des Abwurfschachtes durchtrennt, woraufhin sich das gefäßseitige Kabel mit der Meßbombe in der Metallschmelze auflöst.

Die Abwurfvorrichtung in Form eines Karussells ist über dem Abwurfschacht oberhalb des metallurgischen Gefäßes angeordnet.

Aufgrund der üblicherweise begrenzten Raumverhältnisse, beispielsweise oberhalb eines Konverters, ist die Zahl der bei Verwendung eines Karussells nutzbaren Bomben beschränkt. Der übliche Durchmesser eines derartigen Karussells beträgt 800 mm. Daraus ergibt sich eine Anzahl von zehn Bomben pro Karussell.

Nach dem Abwurf der Meßbomben muß das Karussell in einer umständlichen Prozedur neu bestückt werden. Dabei setzt das Bedienpersonal die Meßbomben von Hand in die im Karussell dafür vorgesehenen Positionen ein. Die Verbindung zwischen den neu eingesetzten Meßbomben und der Meßanlage bzw. den von der vorhergehenden, abgeworfenen Meßbombe verbleibenden anlagenseitigen Kabelresten muß von dem Bedienpersonal von Hand über Steckkontakte hergestellt werden.

Aufgrund der rauhen Bedingungen im Bereich metallurgischer Gefäße scheidet die Verwendung von Schleifkontakten aus, da diese stark verschmutzungsgefährdet sind. Ferner führt deren elektrisches Verhalten bei Messungen im mV-Bereich zu unbrauchbaren Ergebnissen.

Bei der üblichen Zahl von vier bis fünf Messungen pro Charge muß der obige Vorgang etwa nach jeder dritten Charge wiederholt werden. Dies führt im Ergebnis zu einem erheblichen Aufwand.

Des weiteren ist eine Messung unterschiedlicher Parameter, wie beispielsweise die wechselnde Messung von Temperatur und Sauerstoffgehalt einer Schmelze, problematisch, da bereits beim Beschicken des Karussells eine Entscheidung über den Meßbombentypus gefällt werden muß, z.B. die Verwendung dreier Temperaturmeßbomben in Folge, folglich die Reihenfolge der Meßvorgänge festgelegt werden muß oder ein aufwendiges Hin- und Herfahren des Karussells bzw. Positionieren der unterschiedlichen Meßbomben in der Abwurfposition erforderlich wird.

Hiervon ausgehend liegt der Erfindung das Problem zugrunde, eine Abwurfvorrichtung zu schaffen, die eine einfache Durchführung des Meßvorgangs erlaubt.

Das Problem wird gelöst durch eine Abwurfvorrichtung, bei der die Meßbomben hintereinander in einer Reihe angeordnet sind. Diese Vorrichtung erlaubt es, eine hohe Zahl von Meßbomben auf kleinem Raum unterzubringen.

Besonders vorteilhaft ist es mehrere Meßbombenreihen nebeneinander anzuordnen. Die Meßbomben hängen an einer Halterung in einer Profilschiene. Über einen Schacht werden die abgeworfenen Meßbomben dem metallurgischen Gefäß zugeführt. Am schachtseitigen Ende der Schiene befindet sich ein Abwurfmechanismus. Mit Hilfe eines pneumatischen Vorschubkolbens kann die Meßbombenreihe nach dem Abwerfen einer Meßbombe um eine Position verschoben werden, so daß sich zu jedem Zeitpunkt eine Meßbombe in der Abwurfposition befindet.

Die Anordnung der Meßbomben in einer Reihe bietet den Vorteil einer erheblichen Platzersparnis gegenüber einem Meßbombenkarussell. Die parallele Anordnung mehrerer Meßbombenreihen verstärkt nicht nur diesen Vorteil, sondern erlaubt außerdem eine einfache Messung verschiedener Parameter in beliebiger Reihenfolge und beliebigem Wechsel. Dafür werden die unterschiedlichen Reihen jeweils mit Meßbomben für verschiedene Messungen bestückt. Über die Vorschubkolben bzw. Abwurfeinheiten der jeweiligen Reihe kann dann eine beliebige Messung durchgeführt werden.

Bei gleicher Raumausnutzung ist, nach der Lehre der Erfindung gegenüber einem Karussell mit zehn Meßbomben, die Verwendung von 30 Meßbomben möglich.

Die Profilschienen können beispielsweise so mit Meßbomben bestückt sein, daß eine Reihe von Meßbomben für die O₂-Messung und zwei Reihen von Meßbomben für die Temperaturmessung vorgesehen sind. Dies erlaubt im Normalfall die Messung für fünf bis sechs Chargen bevor ein Auffüllen der Schienen erforderlich ist.

Bei der Verwendung unterschiedlicher Meßbombenarten besteht die Gefahr, daß eine Meßbombe in eine für eine andere Meßbombenart vorgesehene Schiene eingehängt wird.

Um derartige Fehler durch das Bedienpersonal bereits durch eine technische Maßnahme auszuschließen und die richtige Zuordnung zu sichern, können die Meßbomben unterschiedliche Haltekopfgrößen besitzen, während die Träger für die Meßbomben, vorzugsweise Profilschienen, unterschiedliche Öffnungsgrößen besitzen. So ist gewährleistet, daß die jeweilige Meßbombe nur in die jeweils vorgesehene Reihe eingefügt werden kann. Diese Technik läßt sich auch für herkömmliche Karusselanlagen verwenden.

Das Problem wird ferner durch eine im Bereich der Abwurfposition der Meßbombe befindliche Hubmechanik mit einer Hebelzange, die um eine Halterung an einem lösbaren Stecker am Meßbombenkopf greift und den Stecker erst nach dem Abwurf der Meßbombe und nach der Messung freigibt, gelöst. Diese Mechanik erlaubt insbesondere ein einfacheres Wechseln der Meßbomben bzw. Auffüllen der Meßbombenreihen, da das Bedienpersonal lediglich die neue Meßbombe einhängen muß, anstatt die beim Abwerfen einer herkömmlich verkabelten Meßbombe verbleibenden Kabelreste umständlich mit der neuen Meßbombe zu verbinden.

Die Meßbombe wird dabei über den Stecker mit einer anlagenseitigen Buchse verbunden. Die Buchse befindet sich im Bereich der Abwurfposition und wird vor dem Abwerfen auf den Stecker aufgeschoben. Der lösbare Stecker ist über ein Kabel mit dem Korpus verbunden ist. Die Buchse kann mit Hilfe einer Hubmechanik bewegt werden. Die Hubmechanik besteht vorzugsweise aus einer schwimmend gelagerten Grundplatte mit einem verschiebbaren Zapfen. Eine derartige Lagerung der Mechanik erlaubt ein problemloses Aufschieben der Buchse auf den Stecker der Meßbombe, auch bei den beim Betrieb auftretenden großen Toleranzen bezüglich der Position des Steckers. Die Hubmechanik besitzt ferner an ihrem meßbombenseitigen Ende eine Hebelzange. Diese wird durch Federn in einer geöffneten Position fixiert. Beim Absenken der Buchse schiebt sich ein Spreizstück zwischen die anlagenseitigen Hebelzangenarme und bewirkt, daß die Zange den Meßbombenstecker umschließt.

Beim Betrieb der Abwurfvorrichtung wird die Meßbombe in die Abwurfposition geschoben und die anlagenseitige Buchse auf den Meßbombenstecker aufgeschoben. Gleichzeitig wird der lösbare Stecker in seiner Position verriegelt. Daraufhin wird zunächst die Meßbombe entriegelt und fällt über einen Zuführschacht in das Gefäß. Dabei entrollt sich ein beispielsweise um den Meßbombenkorpus gewickeltes Kabel, das mit dem Bombenstecker verbunden ist. Die Messung kann nun durchgeführt werden.

Nach der Messung wird der Stecker ebenfalls entriegelt und verläßt die Meßbombenvorrichtung über den Zuführschacht.

Daraufhin wird die Meßbombenreihe mit Hilfe des Vorschubkolbens um eine Position verschoben und die anlagenseitige Buchse auf den nächsten Meßbombenstecker aufgeschoben.

Im Folgenden wird die Erfindung anhand eines in der Zeichnung dargestellten Ausführungsbeispiels des näheren erläutert.

In der Zeichnung zeigen:

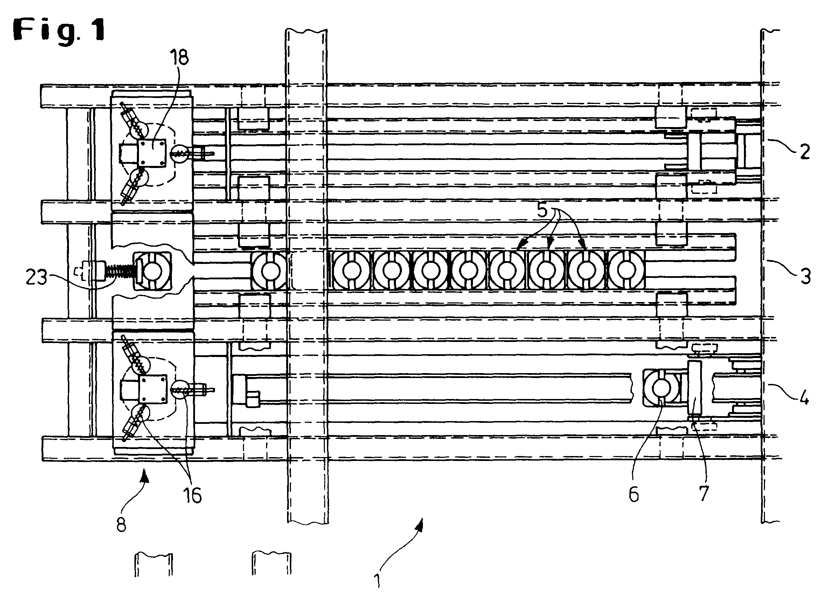

- Fig. 1:: Eine Draufsicht auf eine erfindungsgemäße Abwurfvorrichtung mit Meßbombenreihe;

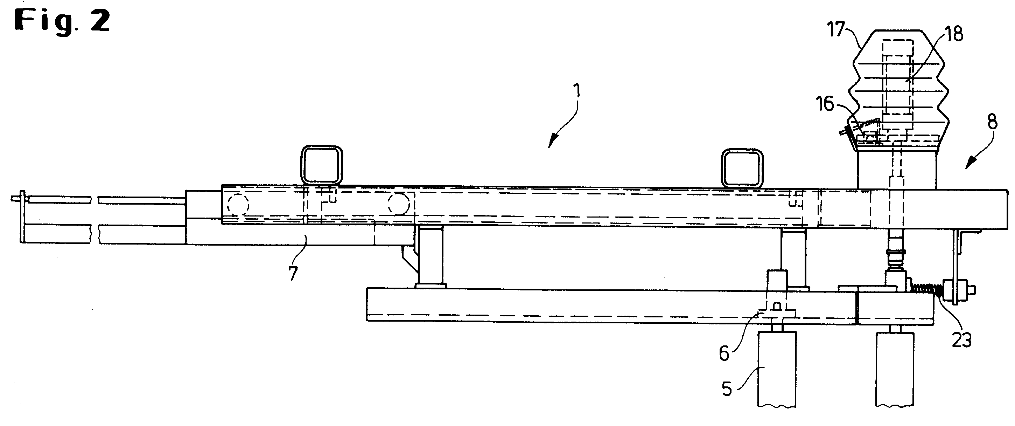

- Fig. 2:: Eine Seitenansicht der Meßbombenreihe der Figur 1;

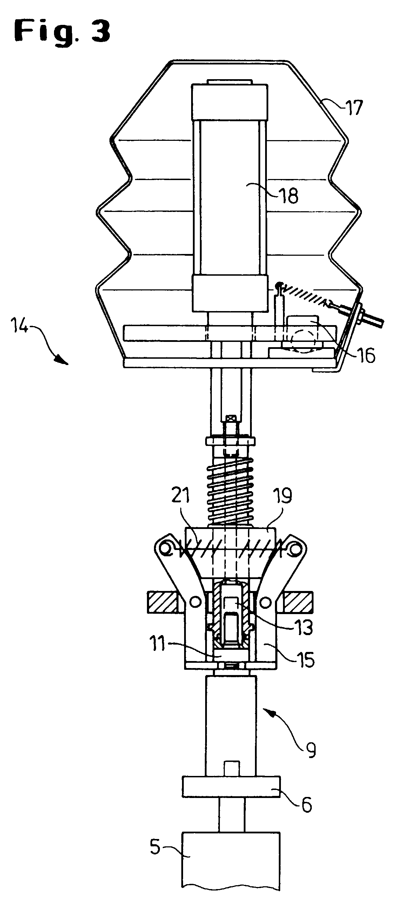

- Fig. 3:: Vorderansicht einer erfindungsgemäßen Hebelzange mit einem Meßbombenstecker und Hubmechanik;

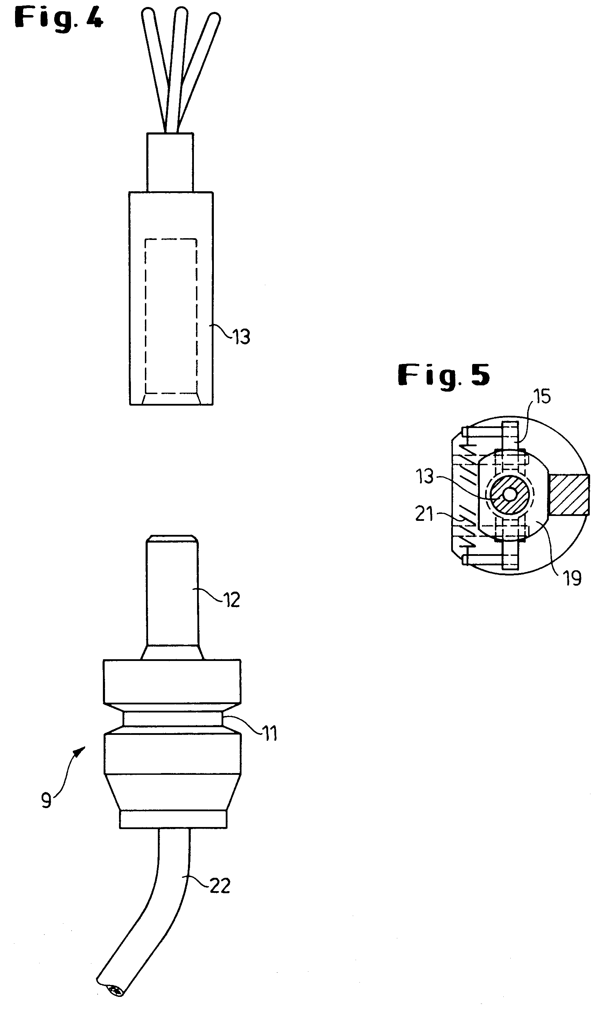

- Fig. 4:: Eine Detailansicht der Halterung und des Steckers am Meßbombenkopf mit darüberliegender anlagenseitiger Buchse;
- Fig. 5:: Eine Draufsicht auf die Hebelzange der Figur 3.

Die Abwurfvorrichtung 1 besteht aus drei Profilschienenreihen 2,3,4, in denen Meßbomben 5 an ihren Halterungen 6 verschiebbar aufgehängt sind.

Über einen Vorschubkolben 7 werden die Meßbomben in die Abwurfposition 8 geschoben. Die Meßbombe 5 ist dort zunächst noch mittels einer Verriegelung gesichert. Über einen Schacht (nicht dargestellt) können die Meßbomben in die zu messende Schmelze gelangen. Die Meßbomben 5 besitzen kopfseitig einen Steckeraufsatz 9 mit einer Steckerhalterung 11 und einem Stecker 12. Der Stecker 12 korrespondiert mit einer anlagenseitigen Buchse 13, die mit einer Anzeige (nicht dargestellt) verbunden ist. Die Buchse 13 befindet sich an einer schwimmend gelagerten Hubmechanik 14 mit einer Hebelzange 15. Die Lagerung 16 ist durch einen Faltenbalg 17 gegen Verschmutzung geschützt. Die Hubmechanik besitzt einen pneumatischen Antrieb 18.

In der Abwurfposition 8 ist die Meßbombe 5 einerseits und der Steckeraufsatz 9 andererseits lösbar verriegelt. Die Verriegelung des Steckeraufsatzes 9 erfolgt mit Hilfe der Hebelzange 15. Die Hebelzange 15 befindet sich beim Einschieben der Meßbombe 5 in die Abwurfposition oberhalb des Steckeraufsatzes. Wenn die Meßbombe in ihre Endposition gelangt ist wird die Hebelzange 15 herabgelassen. Dabei schiebt sich ein Spreizstück 19 zwischen die anlagenseitigen Arme der durch Federn 21 vorgespannten Hebelzange 15 und bewirkt ein Schließen des Zangenkopfes um den Steckeraufsatz 9 bzw. die Halterung 11. Der Steckeraufsatz 9 wird dadurch in seiner Position arretiert. Daraufhin wird die Buchse 13 auf den Stecker 12 aufgeschoben.

Der Abwurf der Meßbombe 5 wird durch Entriegelung der Meßbombenhalterung eingeleitet. Beim Herabfallen der Meßbombe 5 durch den Schacht in die Schmelze entrollt sich ein mit dem Steckeraufsatz verbundenes Meßkabel 22. Der Steckeraufsatz verbleibt in der Abwurfvorrichtung und wird durch die Hebelzange 15 gesichert. Der Steckeraufsatz 9 ist über die Buchse 13 mit der Anzeige für die Messergebnisse verbunden.

In der Buchse 13 befinden sich Kontaktringe, die bei aufgeschobener Buchse den Kontakt zu am Stecker 12 befindlichen Kontaktstiften herstellen. Dadurch sind die Vorteile eines Steckers mit definiertem Widerstand mit den Vorteilen eines automatischen Verbindens in einer Vorrichtung vereint.

Nach der Messung wird wiederum die Hubmechanik betätigt. Dabei wird das Spreizstück 19 aus der Hebelzange herausgezogen, wodurch sich der Zangenkopf öffnet und den Steckeraufsatz 9 freigibt. Dieser fällt über den Schacht in die Schmelze. Die Abwurfposition ist nun für die nächste Meßbombe frei. Es verbleiben keine Kabelreste der abgeworfenen Meßbombe in der Abwurfvorrichtung und ein umständliches Verbinden der Meßbombe mit der Anzeige entfällt.

Beim Auffüllen der Abwurfvorrichtung müssen die Meßbomben daher lediglich in die Schienen 2,3,4 eingehängt werden. Der Vorschubkolben garantiert, daß die Meßbomben nach dem Abwurf um eine Position verschoben werden. Mit Hilfe eines Kontaktschalters 23 wird die Verschiebung gesteuert. Sobald sich eine Meßbombe 5 in ihrer Abwurfposition 8 befindet, beendet der Kontaktschalter den Vorschub.

Die Halterungen 6 besitzen je nach Meßbombenart unterschiedliche Größen. Die Schienen 2,3,4 besitzen korrespondierende Öffnungen, die jeweils nur das Einsetzen der für die jeweilige Schiene vorgesehenen Meßbombe erlauben. Ein fehlerhaftes Auffüllen der Abwurfvorrichtung ist somit ausgeschlossen.

## Patentansprüche

1. Abwurfvorrichtung für Meßbomben mit einer Mehrzahl von lösbar in einem Magazin gelagerten Meßbomben, dadurch gekennzeichnet, daß die Meßbomben (5) bewegbar gelagert sind und sich aus ihrer Lagerungsposition in eine Abwurfposition bewegen lassen.

2. Abwurfvorrichtung für Meßbomben, dadurch gekennzeichnet, daß Meßbombenhalterungen (6) und korrespondierende Träger (2,3,4) der Abwurfvorrichtung je nach Meßbombentypus unterschiedliche Maße besitzen.

3. Abwurfvorrichtung nach Anspruch 1 oder 2, dadurch gekennzeichnet, daß die Meßbomben (5) hängend gelagert sind und sich in die Abwurfposition verschieben lassen.

4. Abwurfvorrichtung für Meßbomben nach einem oder mehreren der Ansprüche 1 bis 3, dadurch gekennzeichnet, daß die Meßbomben (5) in einer Reihe angeordnet sind.

5. Abwurfvorrichtung nach einem oder mehreren der Ansprüche 1 bis 4, mit mehreren Meßbombenreihen.

6. Abwurfvorrichtung für Meßbomben nach einem oder mehreren der Ansprüche 1 bis 5, dadurch gekennzeichnet, daß die Meßbombe mit der Meßtechnik automatisch kontaktiert wird.

7. Abwurfvorrichtung für Meßbomben nach einem oder mehreren der Ansprüche 1 bis 6, gekennzeichnet durch eine verfahrbare Buchse (13), in der Abwurfposition (8).

8. Abwurfvorrichtung für Meßbomben nach einem oder mehreren der Ansprüche 1 bis 7, mit einer Hebelzange (15), die bei dem Abwurf der Meßbombe (5) mittels eines Spreizstücks (19) um eine Halterung (9) an einem Stecker (12) am Kopf der Meßbombe (5) gedrückt wird.

9. Abwurfvorrichtung nach einem oder mehreren der Ansprüche 1 bis 8, dadurch gekennzeichnet, daß die Hebelzange (15) mit der Buchse (13) an einer verfahrbaren Hubmechanik (18) angeordnet sind.

10. Abwurfvorrichtung nach einem oder mehreren der Ansprüche 1 bis 9, dadurch gekennzeichnet, daß die Hubmechanik (18) schwimmend gelagert ist.

11. Verfahren zum Betrieb einer Meßbombenabwurfvorrichtung nach einem oder mehreren der Ansprüchen 2 bis 10, dadurch gekennzeichnet, daß die Träger (2,3,4) mit Meßbomben (5) unterschiedlicher Meßfunktion betrieben werden.
